Europäisches Patentamt

European Patent Office

Office européen des brevets

(19)

(11) **EP 0 618 527 B1**

(12) **EUROPEAN PATENT SPECIFICATION**

(45) Date of publication and mention
of the grant of the patent:
**29.09.1999 Bulletin 1999/39**

(51) Int Cl.⁶: **G06F 3/033**, G06K 11/08,
G06K 11/16

(21) Application number: **94302241.8**

(22) Date of filing: **29.03.1994**

(54) **Input means for liquid crystal display**

Mittel zur Eingabe in einer Flüssigkristallanzeige

Moyen d'entrée pour dispositif d'affichage à cristaux liquides

(84) Designated Contracting States:
**DE FR GB**

(30) Priority: **29.03.1993 US 38367**

(43) Date of publication of application:
**05.10.1994 Bulletin 1994/40**

(73) Proprietor: **NCR International, Inc.**
**Dayton, Ohio 45479 (US)**

(72) Inventor: **Baur, Peter**
**86156 Augsburg (DE)**

(74) Representative: **Cleary, Fidelma et al**
**International IP Department**
**NCR Limited**
**206 Marylebone Road**
**London NW1 6LY (GB)**

(56) References cited:
**DE-A- 3 822 477        GB-A- 2 162 673**
**US-A- 3 772 518        US-A- 4 701 024**
**US-A- 5 159 323**

## Description

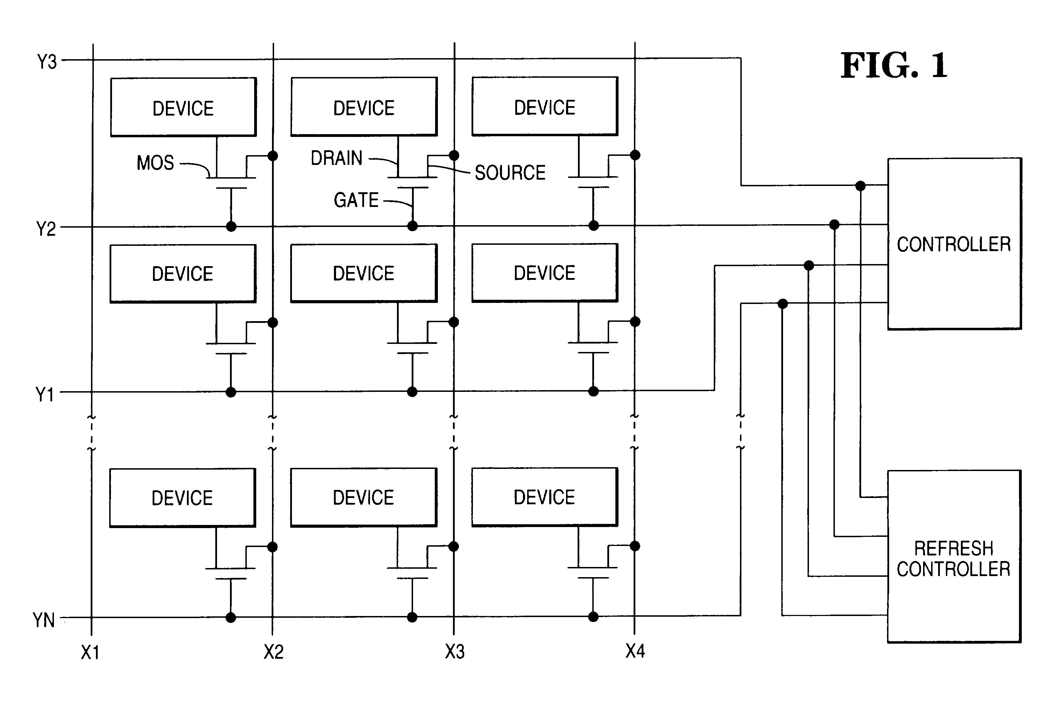

This invention relates to liquid crystal display devices. Figure 1 illustrates nine pixels of a Liquid-Crystal Display (LCD). Each box labeled DEVICE represents one of the LCD elements. Each LCD element is called a pixel. The transistors labeled MOS turn their respective pixels on and off.

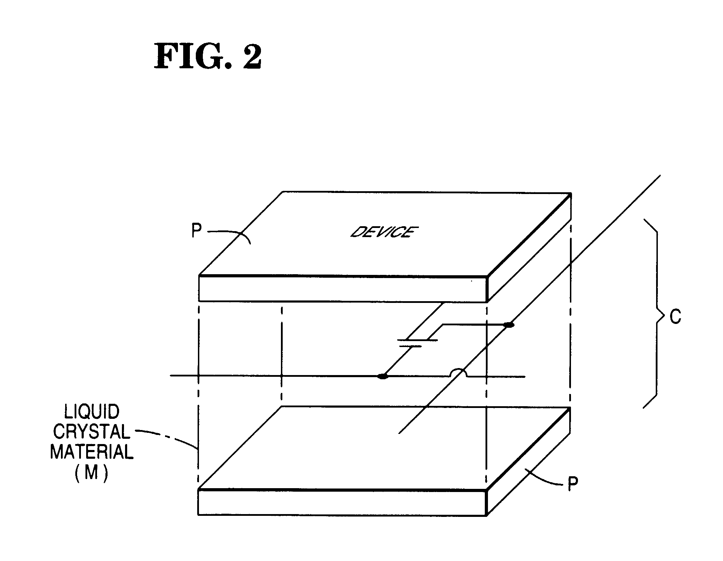

The operation of the LCD can be explained, in a very simplified manner, as follows. In Figure 2, liquid crystal material M is contained between the plates P of a capacitor C. (Each box labeled "DEVICE" in Figure 1 contains one of the devices shown in Figure 2.) Each plate P in Figure 2 actually takes the form of a thin coating of Indium Tin Oxide, ITO, on GLASS, as indicated in Figure 3A. Each coating of ITO, in turn, bears a coating of polyimide, as indicated in the insert 4. The polyimide has been rubbed, during manufacture, in a unidirectional manner. The rubbing causes the molecules of the liquid crystal material, which are adjacent to the polyimide, to align with the direction of rubbing. For example, molecules M1 and M2 align as shown. The polyimide layers are arranged such that the aligned molecules M1 and M2 are perpendicular to each other, as shown. The molecules located in the bulk of the liquid crystal try to align themselves with M1 and M2, but, because M1 and M2 are perpendicular, the bulk molecules align into a helix H which bridges M1 and M2.

Polarizing filters are affixed to each sheet of GLASS, as indicated. When incoming LIGHT enters, as shown in Figure 3B, the polarization of the LIGHT follows the twisted molecules, and the LIGHT undergoes a continuous 90-degree twist, as shown, and exits through the bottom polarizing filter. The human EYE, perceives the pixel as bright, because of the exiting LIGHT. However, when a small voltage (such as 3 - 5 volts) is applied between the ITO plates, the voltage creates an ELECTRIC FIELD in Figure 4, which disturbs the gradual twist of the molecules. The helix no longer exists. The light is no longer twisted as it travels, but is blocked by the lower polarizing filter, as shown in Figure 5. The pixel appears dark.

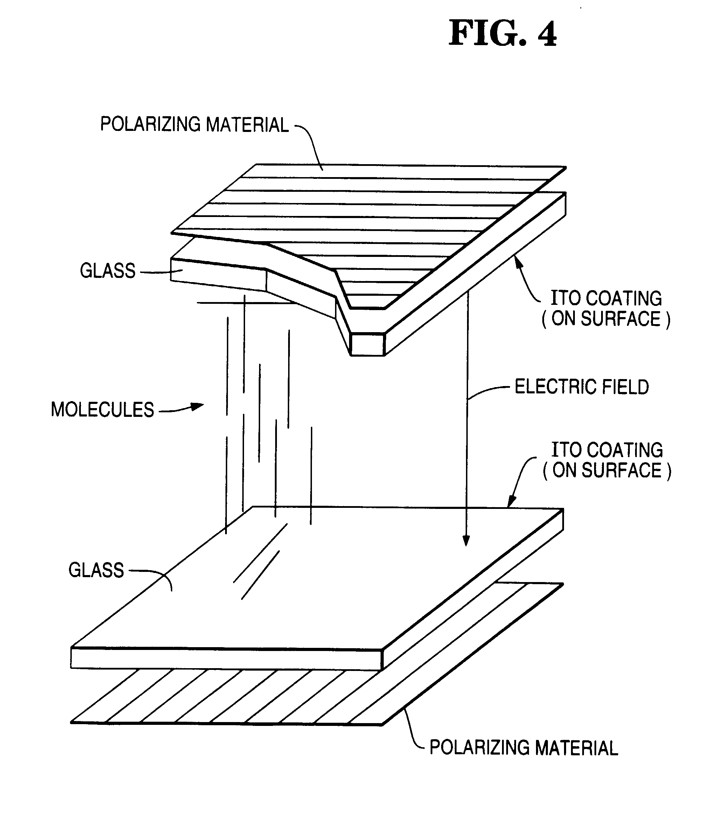

In an actual LCD, the number of pixels is quite large. For example, the display of a small computer can contain an array of 480 x 640 pixels, giving a total of 307,200 pixels. With such a large number of pixels, the voltage described in connection with Figure 4 is applied to each MOS in multiplex fashion. In multiplexing, there exists an external Random-Access Memory (termed Video RAM, or V-RAM) which contains a memory cell for each pixel. A video controller (not shown) writes data, which represents the image to be displayed, into the V-RAM. Then, other circuitry (not shown) reads each cell in the V-RAM, and applies the proper voltage to the corresponding MOS, causing each pixel to become bright or dark, as appropriate. The charge which produces the ELECTRIC FIELD shown in Figure 4 does not last forever, but dissipates with time. Consequently, the video display is "refreshed" periodically, to restore the charge. In one type of refreshing, a controller (indicated in Figure 1) reads each memory cell in V-RAM, and applies the proper charge to each MOS of each pixel, based on the memory cell's contents.

Figure 1 is somewhat exaggerated for clarity: the Metal Oxide Semiconductor Transistors (MOS) actually occupy proportionately less than shown, and the DISPLAY occupies greater space. The reason for giving the DISPLAY element more space is to allocate maximum area to the information-producing component, namely the DISPLAY element. LCD displays are becoming widely used, especially in portable computers having pen-type input devices (which augment, or substitute for, keyboard input).

GB-2 162 673-A describes a liquid crystal display device having a plurality of pixels. Each pixel has a photodiode associated therewith. Information is input into the device using a light pen, which inputs a light beam. The position of the light beam, and therefore the pen, relative to the display is detected by the photodiodes.

US-5,159,323 describes a liquid crystal display device having a plurality of pixels. When pressure is applied, using a pen, to one of the pixels, a voltage is generated across the liquid crystal layer at the point of pressure. Each pixel is provided with means for detecting the pressure-generated voltage, therefore indicating the position of the pen relative to the display. The same liquid crystal layer is used for display and pressure detection, the two operations being performed in alternate cycles.

DE-A-38 22 477 describes a display device comprising a plurality of pixels and a layer of pressure sensitive material provided underneath the pixels. Respective pressure detection means are provided to indicate the position of a pen relative to the display.

US-4,701,024 describes a liquid crystal display device which uses a magnetically sensitive liquid crystal material in which the molecular orientation varies in response to a change of magnetic field. If a permanent magnet is brought adjacent to the liquid crystal material, its molecular orientation changes and the position of the magnet relative to the display can be determined accordingly.

It is an object of the present invention to provide a liquid crystal display device adapted for versatile input operation.

Therefore according to the present invention, there is provided a liquid crystal display device including a plurality of pixels, said device comprising a plurality of sensor devices, adapted to sense the presence of a hand-held stylus and associated with respective pixels, and a plurality of sense lines adapted to carry signals produced by said sensor devices; characterised in that a plurality of color select means are provided, in that said sensor devices are coupled to said color select means, and in that said pixels each include a plurality of individual pixel elements associated with respective colors to be displayed.

It will be appreciated that by providing, in a liquid digital display device according to the invention, a plurality of sensor devices associated with respective pixels and a plurality of sensor lines, versatile input operating modes for the device are possible.

Embodiments of the present invention will now be described by way of example, with reference to the accompanying drawings, in which:-

Figure 1 illustrates a nine-element liquid-crystal display (LCD).

Figure 2 illustrates a single element of the LCD.

Figure 3A illustrates a liquid crystal pixel.

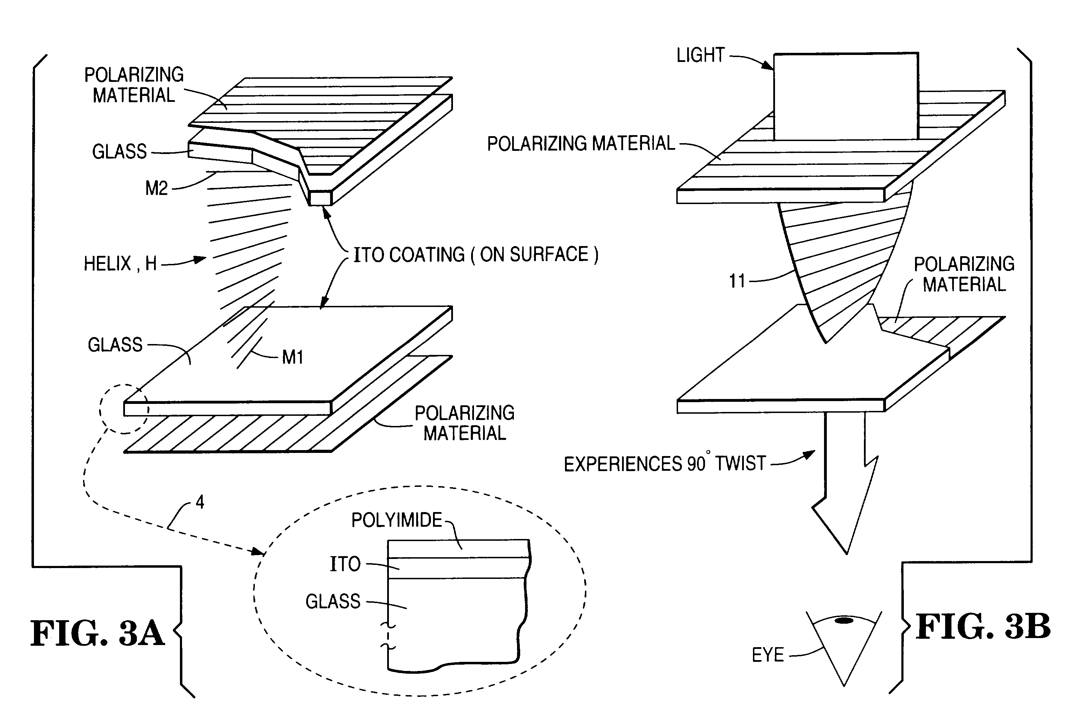

Figure 3B illustrates light being twisted by the pixel of Figure 3A.

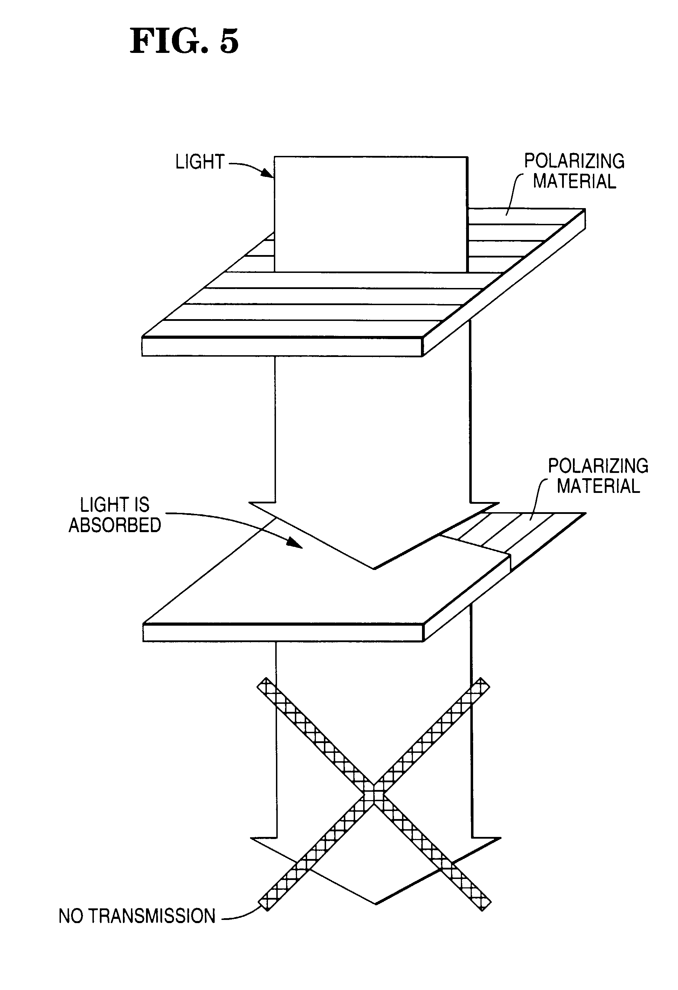

Figures 4 and 5 illustrates blockage of light caused by application of a voltage to the pixel of Figure 3A.

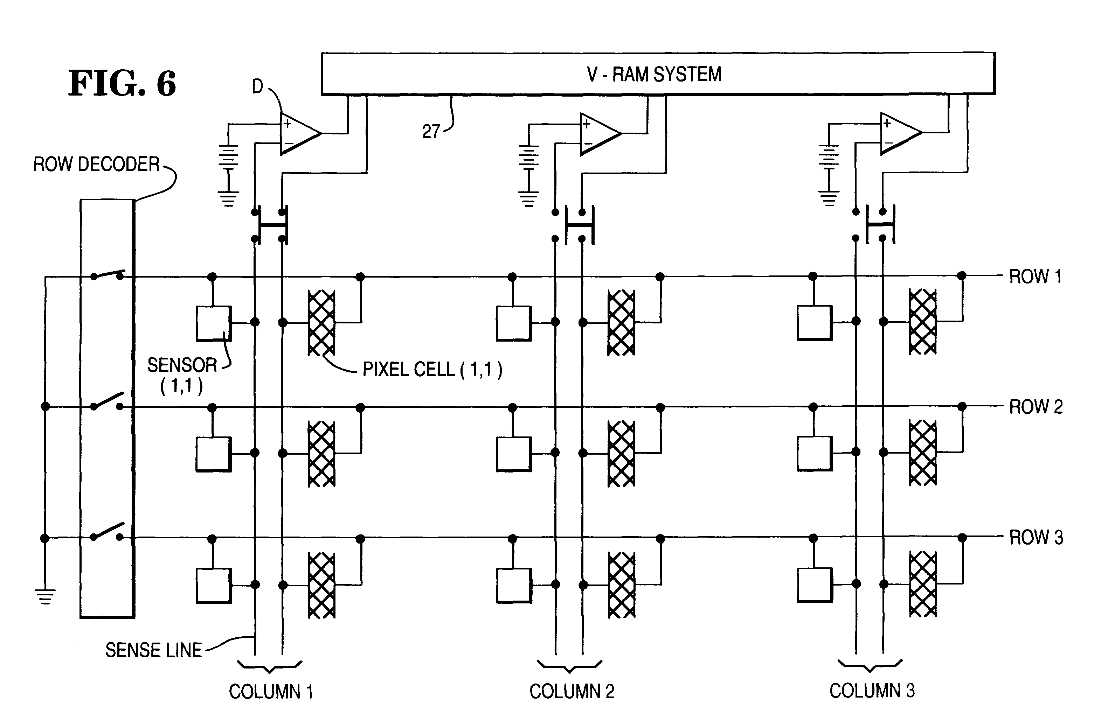

Figure 6 illustrates one form of the invention.

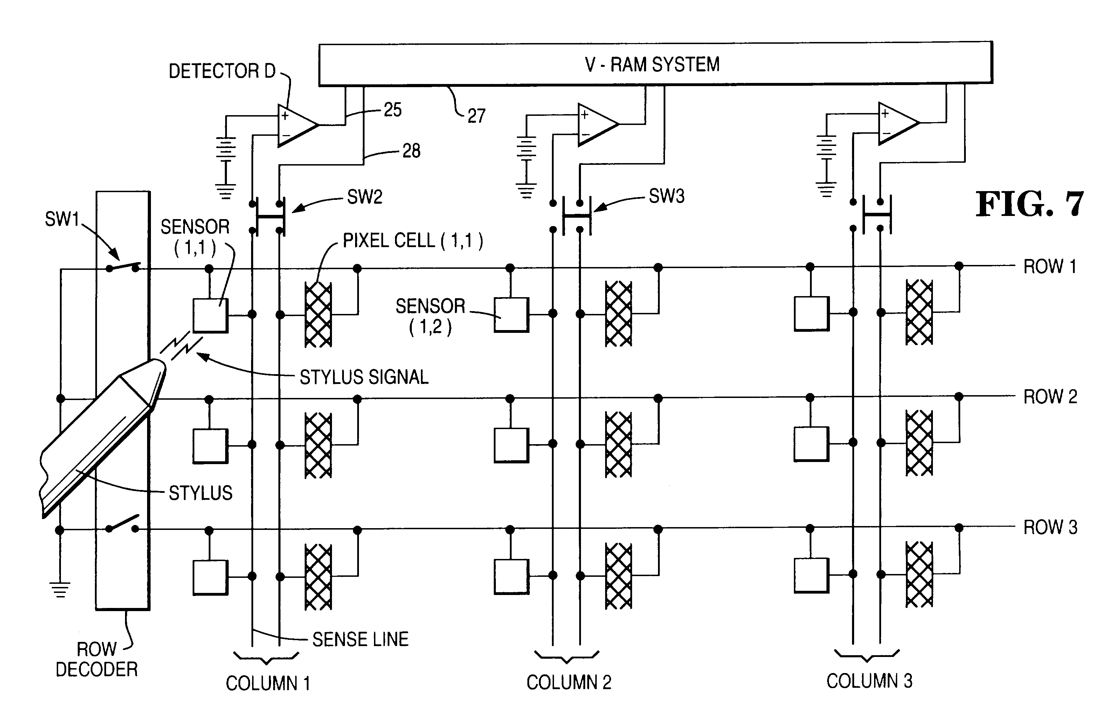

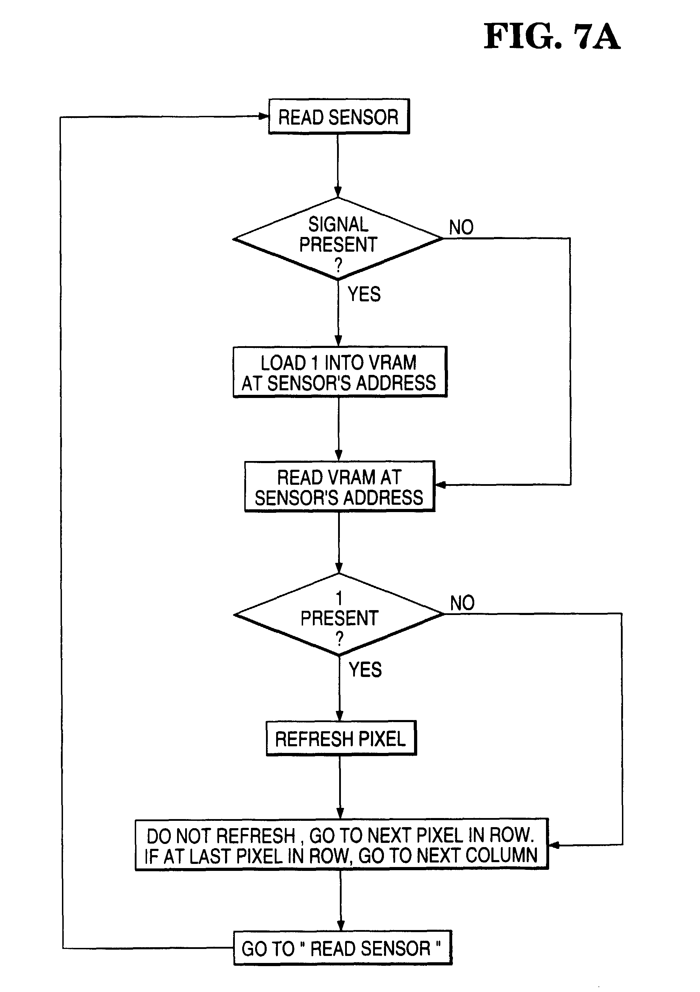

Figure 7 illustrates a hand-held STYLUS delivering a signal to the SENSOR of Figure 6.

Figure 7A is a flow chart illustrating one approach to polling the SENSORs of Figure 6.

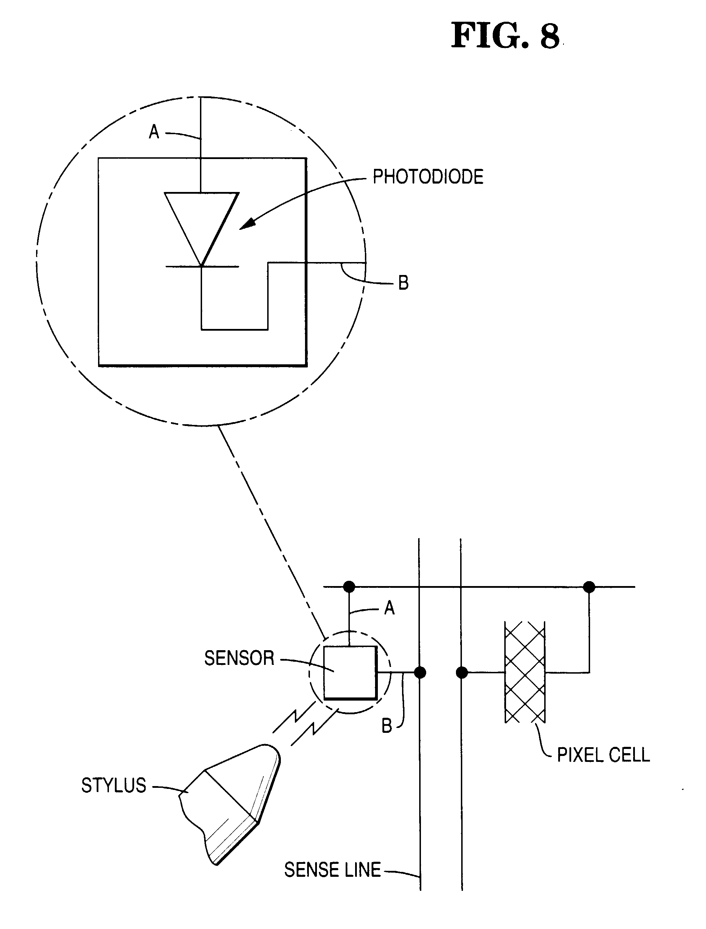

Figure 8 illustrates a photodiode used as a SENSOR. This photodiode can respond to light, or to temperature.

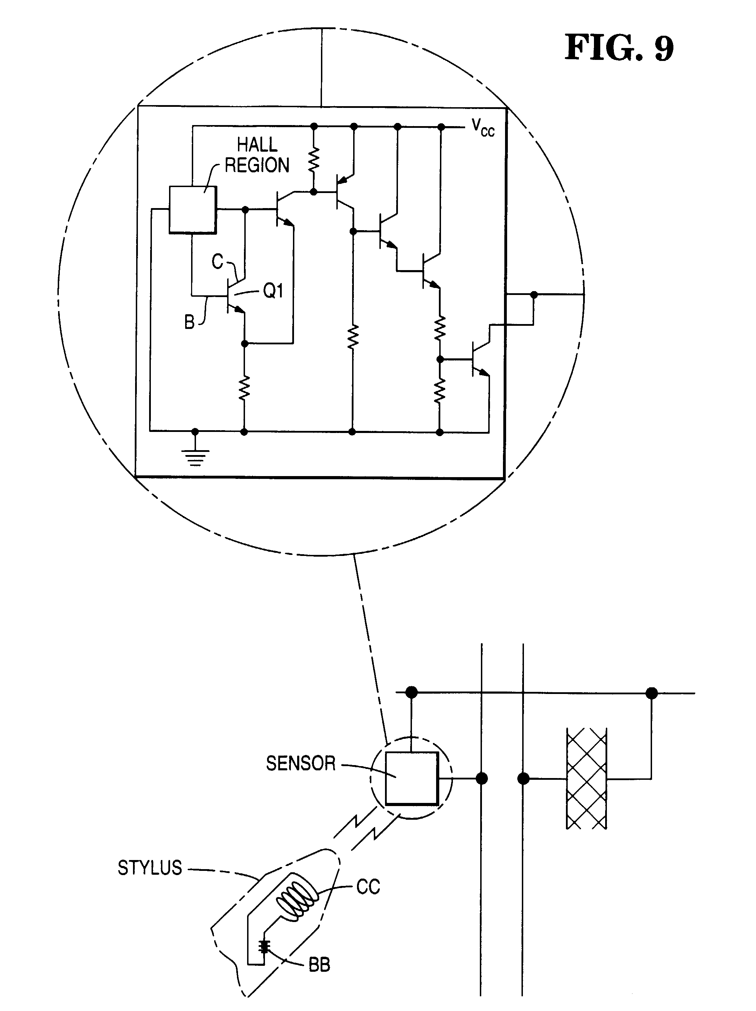

Figure 9 illustrates one type of Hall-effect SENSOR.

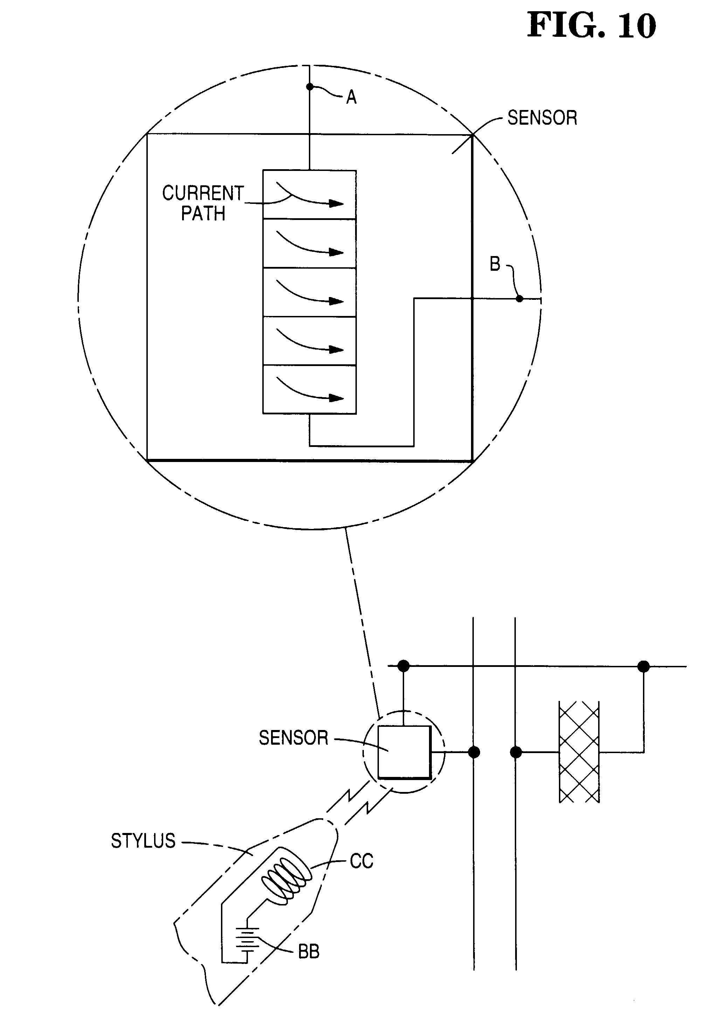

Figure 10 illustrates a magnetoresistive SENSOR.

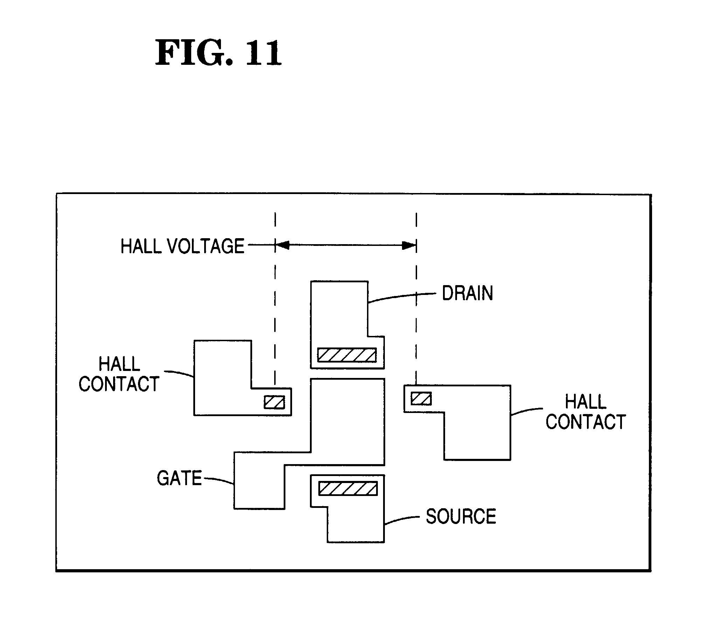

Figure 11 illustrates a MAGFET Hall-effect SENSOR.

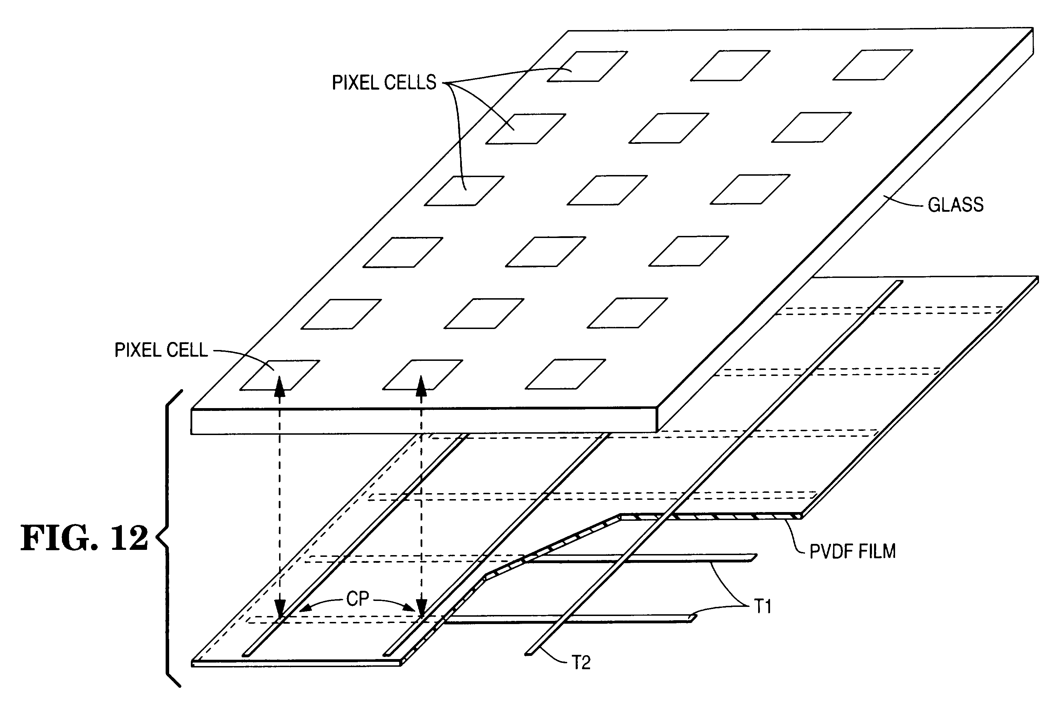

Figure 12 illustrates a Poly Vinyl DiFluoride (PVDF) film used as a SENSOR.

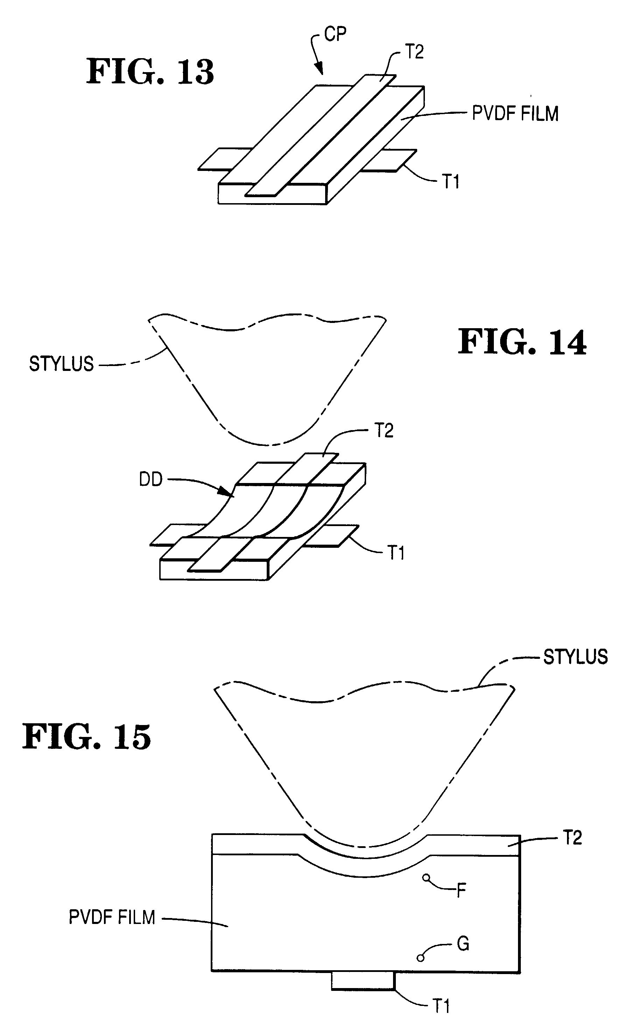

Figure 13 illustrates a crossing point CP of traces T1 and T2 on the PVDF film.

Figure 14 illustrates a STYLUS making a depression DD at the crossing point CP of Figure 13.

Figure 15 illustrates a voltage developed by the depression DD of Figure 14.

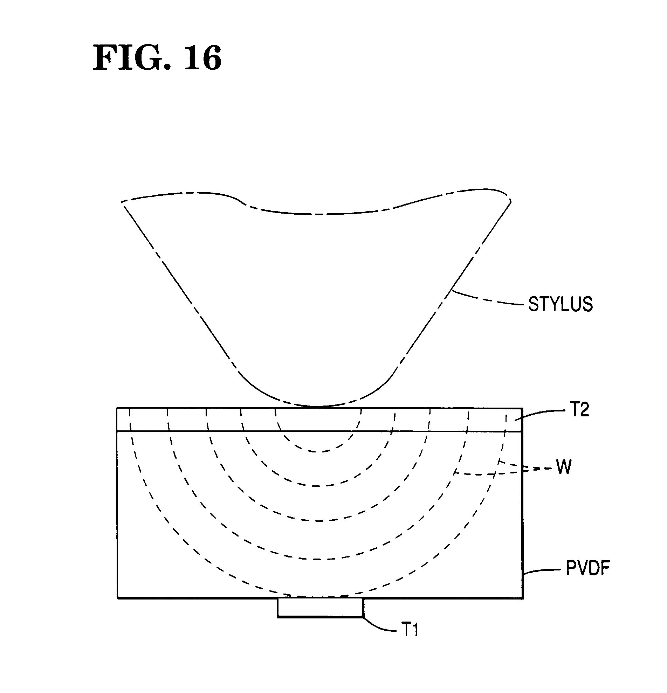

Figure 16 illustrates an acoustic wave W being transmitted by the STYLUS into the PVDF film.

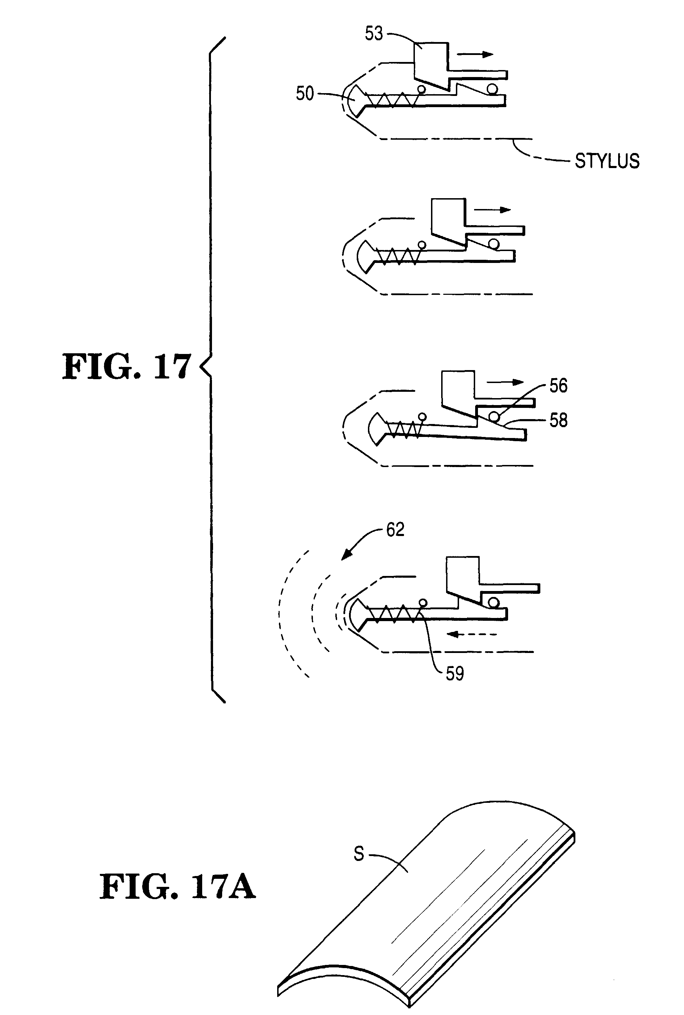

Figure 17 illustrates a manually powered acoustic signal generator.

Figure 17A illustrates a bent, flat spring, which produces an acoustic signal when deformed.

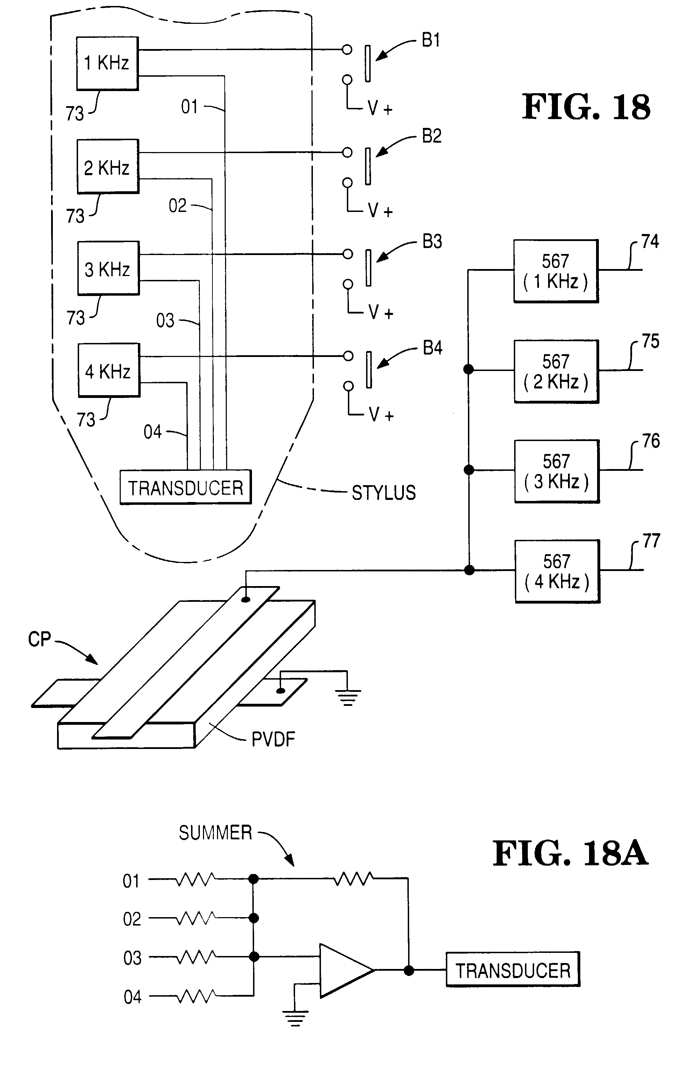

Figure 18 illustrates a STYLUS having multiple oscillators 73.

Figure 18A illustrates a SUMMER for adding the oscillator signals of Figure 18.

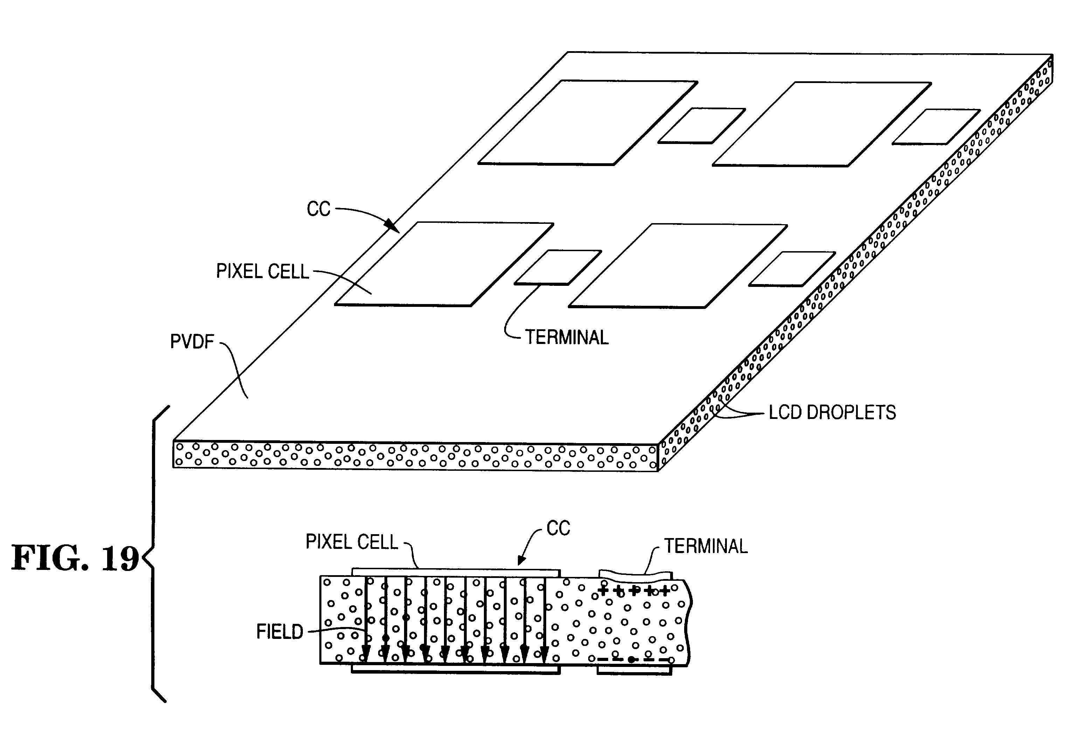

Figure 19 illustrates a PVDF sheet containing liquid crystal droplets.

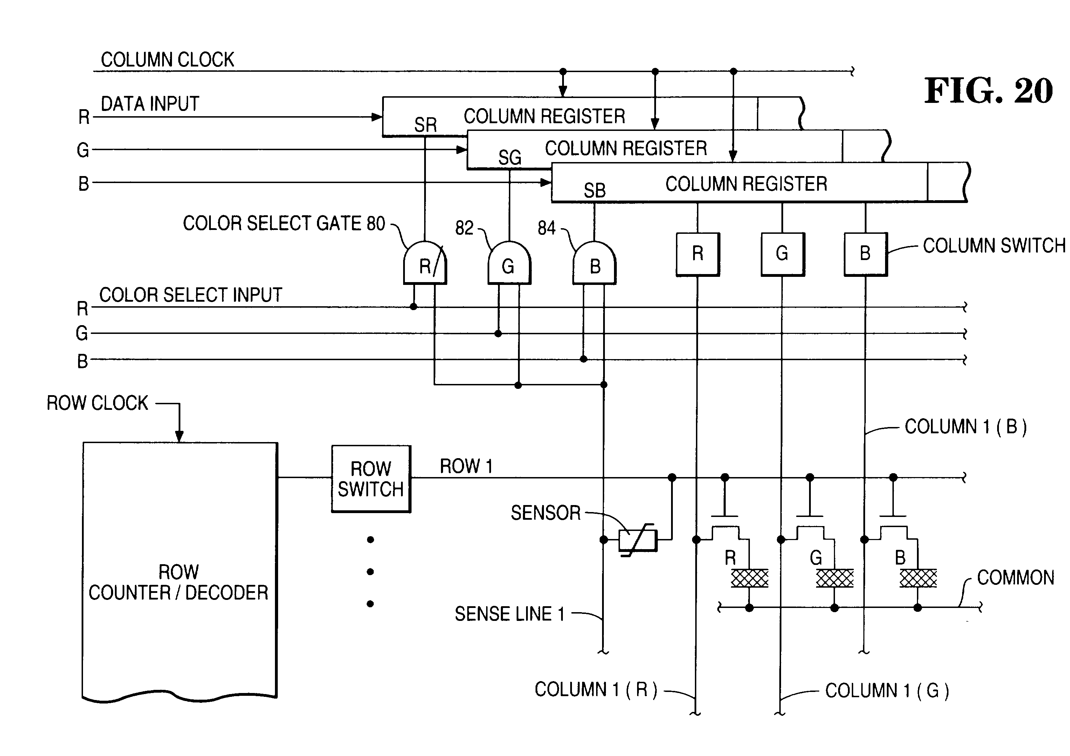

Figure 20 illustrates use of the STYLUS to produce color signal input.

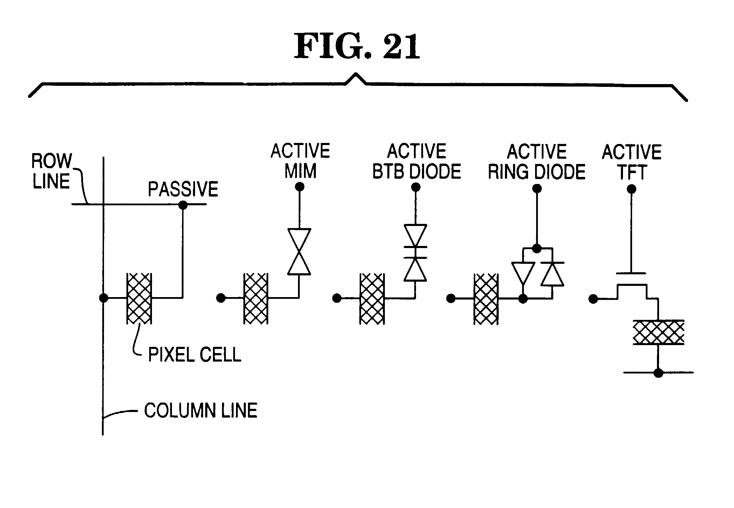

Figure 21 illustrates different types of actuators for the DEVICEs of Figure 1. These different types can replace the MOSs in Figure 1.

Figure 6 illustrates a 3 x 3 array of pixels. A SENSOR is associated with each pixel. Associated with each column of pixels is a SENSE LINE. Each SENSOR in the column connects to the column's SENSE LINE. When a user wishes to actuate a pixel, the user brings a hand-held input device, or STYLUS, adjacent the desired pixel, as shown in Figure 7. The stylus produces a STYLUS SIGNAL, which is detected by the SENSOR. The sensor produces a sense signal on the SENSE LINE.

One approach for detecting the STYLUS SIGNALS is the following. As shown in Figure 7, switch SW1 of a ROW DECODER and switch SW2 of the SENSE LINE are both closed. Any signal produced by SENSOR (1,1) can now be detected by DETECTOR D. If SENSOR (1,1) indicates that a STYLUS SIGNAL is being received, the DETECTOR D responds, and produces a signal on line 25. The V-RAM SYSTEM 27 stores this signal in V-RAM at the location corresponding to the address of SENSOR (1,1). The V-RAM SYSTEM then interrogates SENSOR (1,2), by opening switch SW2 and closing switch SW3. SENSOR (1,2) is read and its signal stored in V-RAM. The operation proceeds until all SENSORs have been interrogated, and all PIXEL CELLS refreshed. Next, the V-RAM SYSTEM interrogates all memory cells in V-RAM, and applies charge to the corresponding MOS's, as appropriate, to brighten or darken each pixel. Then, the process of polling each SENSOR repeats, followed by refreshing.

Figure 7A is a flow chart illustrating the polling/refresh cycle, but slightly modified from the procedure just outlined. In the flow chart, refreshing is done for each pixel cell immediately after reading the SENSOR associated with each cell. This reading and refreshing process is quite rapid. An entire screen of 480 x 600 pixels (307,200 pixels total) is refreshed every 0.005 second, or so. This rate is very fast, compared with normal motion of the human hand, so that even if the STYLUS in Figure 7 is moving, it will dwell long enough over each SENSOR to allow detection of the STYLUS SIGNAL.

Numerous combinations of SENSOR and STYLUS are possible. One combination is a photosensor, such as a PHOTODIODE, shown in Figure 8. Other types of photosensor can used, such as phototransistors, or photo-field-effect transistors (neither is shown). With this combination, radiation, in the form of light, is the STYLUS SIGNAL. The photosensor produces a change in voltage, between points A and B, in response to the light.

Alternatively, the signal produced can be darkness. That is, in this case, all SENSORS ordinarily produce signals in response to ambient light. The STYLUS is passive, and produces a shadow, by eclipsing the ambient light. The shadow causes the shadowed SENSORs to produce different signals than those exposed to ambient light. This type of combination is perhaps best for small LCD displays. In a large display, the heel of the user's hand (which holds the STYLUS) will probably rest partly on the display and cause shadowing itself. In a small display, this type of shadowing will not occur.

A Hall-effect SENSOR can be used. In this case, the signal produced by the stylus will be a magnetic signal. One type of Hall-effect sensor, known in the prior art, is shown in Figure 9. With no magnetic field applied by the stylus, current flows through the Hall region, as though flowing through a normal resistor. However, when a magnetic field is applied, a Hall voltage is produced, which produces a voltage between the collector C and base B of transistor Q1. The actuation of Q1 is detected by the remaining transistors. The magnetic field is produced by coil CC contained within the STYLUS. The coil CC is powered by a battery BB. It is known in the prior art how to construct such a HALL REGION of size 250 x 250 (10 x 10 mils).

A magnetoresistive sensor can be used. In this case, the signal produced by the stylus is magnetic. The magnetic signal is detected by a magnetoresistive material. There are two major classes of magnetoresistive material. In one, a magnetic field (not shown) forces the current to traverse a longer path than it would ordinarily. Figure 10 indicates this longer CURRENT PATH. The magnetic field is perpendicular to the plane of the Figure. The longer path produces a larger voltage drop between points A and B, which is detected. Magnetoresistive sensors are known in the art. A second class of sensor does not utilize a longer current path, but relies on giant magneto-resistive molecules. The SENSOR in Figure 10 is constructed using these molecules. A magnetic field distorts the molecules, causing a change in resistance, which is detected in a customary manner.

Hall contacts can be added to a large-channel, enhancement-mode, MOSFET having large channel dimensions, and which is operated in either pinch-off or triode mode. One example is shown in Figure 11. Such MOSFETs are called MAGFETs, and are known in the art. A magnetic stylus is used.

A transparent poly vinyl difluoride (PVDF) film can be attached to the glass, as shown in Figure 12. One supplier of such film is Pennwalt Corporation, located in King of Prussia, Pennsylvania, which sells the film under the generic name "piezo-electric film" and the trade name KYNAR. The PVDF film contains signal traces T. Horizontal traces T1 are located on the bottom of the film; vertical traces T2 are located on the top. The crossing points CP are positioned beneath respective PIXEL CELLs, as indicated. Figure 13 shows an enlarged view of a crossing point. When the stylus presses upon the PVDF film, it creates a depression DD, as shown in Figure 14. The depression causes a voltage to arise between points F and G in Figure 15. This voltage is detected on the traces T1 and T2, by a detector such as D in Figure 7. The PVDF film is a type of strain gauge, albeit distributed uniformly across the LCD display. Alternately, conventional strain gauges can be used, one at each crossing point CP in Figures 12 and 13.

The STYLUS can be active; it can produce an acoustic signal, indicated by sound waves W in Figure 16. The sound waves, upon entering the PVDF film, cause compressions and rarifactions, which produce detectable voltages. To produce the sound, the STYLUS can contain a transducer, such as a piezo-electric speaker, and an electrical oscillator, which cause the tip of the STYLUS to vibrate. An oscillator requires a power supply, such as a battery, and this requirement can be disadvantageous. To eliminate a power supply, the acoustic signal can be produced by energy supplied by the human user of the STYLUS. For example, as shown in Figure 17, the STYLUS contains a hammer 50. When the user's finger (not shown) pulls a trigger 53, the trigger 53 pulls the hammer 50 back until a pin 56 disengages the hammer 50 from the pin, via cam 58. Upon disengagement, a spring 59 drives the hammer 50 into contact with the tip of the STYLUS, producing a sound 62. The sound 62 causes compression and decompression in the PVDF film in Figure 16, producing a signal on traces T1 and T2.

There are numerous other ways of producing an acoustic signal, or clicking sound, based on motion of a finger. For example, a flat leaf spring S in Figure 17A, having a slightly C-shaped cross section, will produce a "click" when bent. Similarly, a steel diaphragm (not shown) having a bulge formed into it (resembling the bottom of an oilcan) produces a "click" when deformed. Other types of finger-operated noise-makers are known.

The acoustic signal must persist long enough for the refresh circuitry to detect it. That is, the acoustic signal should last longer than one refresh cycle. (If the acoustic signal lasted, for example, 1/5 of a refresh cycle, it could disappear before the SENSOR detecting the signal were polled.) To produce a signal of longer duration, the trigger mechanism of Figure 17 can pluck a string or tuning fork, producing a sustained note which excites the PVDF film.

The STYLUS can contain multiple oscillators 73, each operating at a different frequency, as shown in Figure 18. Each crossing point CP (also shown in Figure 13) acts as a transducer which responds to all oscillators. A DISCRIMINATOR detects which signal was sent. As an example, the STYLUS has four buttons B1 - B4, which actuate switches, and which produce one of the following frequencies: 1 KHz, 2 KHz, 3 KHz, or 4 KHz. The crossing point CP produces a time-varying voltage at the frequency received. The DISCRIMINATOR can comprise four LM 567 integrated circuits, as indicated. Each 567 is tuned to one of the STYLUS's frequencies. Thus, if the STYLUS produces a signal of 2 KHz, line 75 produces a signal. If the STYLUS produces a signal of 4 KHz, line 77 produces a signal. The different signals can be used to draw lines of different color. For example, one frequency can call for red color. Another for blue color, and so on. This type of STYLUS can be used with the color V-RAMs described later.

More than one frequency can be produced by the STYLUS simultaneously. In this case, the oscillators' outputs O1 - O4 are added in a SUMMER in Figure 18A, which feeds the transducer TRANS, perhaps through an amplifier (not shown). The 567's respond as usual. Now, a four-bit binary word is transmitted by the STYLUS.

Thin sheets of material, in the range of 25 microns (one mil) thick, are available which contain encapsulated drops of liquid crystal material. One supplier is Raychem Corporation, located in Menlo Park, California. This material is known as "Polymer Dispersed Liquid Crystal" (PDLC) or "Nematic Curvilinear Aligned Phase" (NCAP) film material. Such materials can be used as the LCD display. Alternatively, as shown in Figure 19, this sheet material can be constructed of PVDF. When the STYLUS is applied to the sheet, it produces a voltage detected by the TERMINALs, as indicated by the + and - symbols at the lower right part of the Figure. This voltage is detected and stored in V-RAM, as described above Transparent capacitors CC, of very thin metal, form the PIXEL ELEMENTs. A voltage applied to the capacitor CC will darken the PIXEL CELL, as described above. The connectors are not shown in Figure 19, for simplicity.

The SENSORs can be temperature-sensitive. One such SENSOR is the P-N diode. The current-voltage expression for such a diode is the following:

$$I = I_o \, [\exp(qV/kT) - 1]$$

wherein

$I_o$ is reverse saturation current
q is the charge on the electron
V is the voltage across the junction
k is Boltzmann's constant
T is temperature, degrees Kelvin.

If current is held constant, then the voltage is proportional to temperature of the diode. The voltage V changes by about 2 millivolts for each degree C change in temperature, provided current I is held constant. Thus, the P-N diode of Figure 8 can be used. The STYLUS contains a source of heat, such as a laser diode, or an infrared light source. A bipolar junction transistor can also be used as the SENSOR: it contains two diodes: one at the base-collector junction, and the other at the base-emitter junction. The current fed to the diode must be held constant, as stated above. Constant current sources are known in the art.

Figure 20 shows how the SENSOR can be used to provide data indicative of the desired color of a pixel, in addition to position data. A user actuates one, or a combination, of the three COLOR SELECT INPUTs, R (red), G (green), or B (blue). The AND-gates 80, 82, and 84 accordingly deliver the signal produced by the SENSOR to the respective column registers. For example, if the user selects R and B, then lines SR and SB deliver signals to the column registers of the V-RAM. Each pixel has associated three capacitors, for the three colors, namely, R, G, and B, as indicated.

The pixels need not be activated by the MOS transistors indicated in Figure 1. Other approaches to actuation are shown in Figure 21. These are known in the art. MIM refers to Metal-Insulator-Metal structures, such as Chrome-Tantalum pentoxide-Tantalum. BTB refers to back-to-back diodes. TFT refers to Thin Film Transistors.

## Claims

1. A liquid crystal display device including a plurality of pixels, said device comprising a plurality of sensor devices (SENSOR), adapted to sense the presence of a hand-held stylus (STYLUS) and associated with respective pixels, and a plurality of sense lines (SENSE LINE) adapted to carry signals produced by said sensor devices; characterised in that a plurality of color select means (80, 82, 84) are provided, in that said sensor devices are coupled to said color select means (80, 82, 84), and in that said pixels each include a plurality of individual pixel elements associated with respective colors to be displayed.

2. A device according to claim 1, characterized in that said sensor devices are adapted to detect light.

3. A device according to claim 1, characterized in that said sensor devices are adapted to detect magnetic fields

4. A device according to claim 1, characterized in that said sensor devices are adapted to detect temperature changes.

5. A device according to claim 1, characterized in that said sensor devices are adapted to detect mechanical deformation.

6. A device according to claim 5, characterized in that said sensor devices include respective strain gauges.

7. A device according to claim 5, characterized in that said sensor devices include piezo-electric material.

8. A device according to any one of the preceding claims, wherein said pixel elements are capacitors.

9. A device according to any one of the preceding claims, wherein said pixels each include three pixel elements associated with red, green and blue respectively.

## Patentansprüche

1. Flüssigkristall-Anzeigevorrichtung aufweisend eine Vielzahl von Bildpunkten, wobei die Vorrichtung eine Vielzahl von Abtastelementen (SENSOR) umfaßt, die zum Abtasten des Vorhandenseins eines handgeführten Stiftes (STYLUS) geeignet und mit jeweiligen Bildpunkten verbunden sind, sowie eine Vielzahl von Abfrageleitungen (ABFRAGELEITUNG) umfaßt, die zur Übertragung von durch die Abtastelemente erzeugten Signalen geeignet sind; dadurch gekennzeichnet, daß eine Vielzahl von Farbauswahlgliedern (80, 82, 84) vorgesehen ist, daß die Abtastelemente an die Farbauswahlglieder (80, 82, 84) gekoppelt sind, und daß die Bildpunkte jeweils eine Vielzahl einzelner Bildpunktelemente aufweisen, die zu jeweils anzuzeigenden Farben gehören.

2. Vorrichtung nach Anspruch 1, dadurch gekennzeichnet, daß die Abtastelemente zur Erfassung von Licht geeignet sind.

3. Vorrichtung nach Anspruch 1, dadurch gekennzeichnet, daß die Abtastelemente zur Erfassung von Magnetfeldern geeignet sind.

4. Vorrichtung nach Anspruch 1, dadurch gekennzeichnet, daß die Abtastelemente zur Erfassung von Temperaturänderungen geeignet sind.

5. Vorrichtung nach Anspruch 1, dadurch gekennzeichnet, daß die Abtastelemente zur Erfassung mechanischer Formveränderung geeignet sind.

6. Vorrichtung nach Anspruch 5, dadurch gekennzeichnet, daß die Abtastelemente jeweils Dehnungsmesser einschließen.

7. Vorrichtung nach Anspruch 5, dadurch gekennzeichnet, daß die Abtastelemente eine piezoelektrische Substanz einschließen.

8. Vorrichtung nach einem der vorhergehenden Ansprüche, wobei die Bildpunktelemente Kondensatoren sind.

9. Vorrichtung nach einem der vorhergehenden Ansprüche, wobei die Bildpunkte jeweils drei Bildpunktelemente einschließen, die zu Rot, Grün bzw. Blau gehören.

## Revendications

1. Un dispositif afficheur à cristaux liquides comportant une pluralité de points d'image, ledit dispositif comprenant une pluralité de dispositifs capteurs (CAPTEUR), adaptés pour capter la présence d'un style à main (STYLE) et associés à des points d'image respectifs, et une pluralité de lignes de lecture (LIGNE DE LECTURE) adaptées pour porter des signaux produits par lesdits dispositifs capteurs; caractérisé en ce qu'une pluralité de moyens de sélection de couleur (80, 82, 84) sont fournis, en ce que lesdits dispositifs capteurs sont accouplés auxdits moyens de sélection de couleur (80, 82, 84), et en ce que lesdits points d'image comportent chacun une pluralité d'éléments points d'image individuels associés aux couleurs respectives à afficher.

2. Un dispositif conformément à la revendication 1, caractérisé en ce que lesdits dispositifs capteurs sont adaptés pour détecter de la lumière.

3. Un dispositif conformément à la revendication 1, caractérisé en ce que lesdits dispositifs capteurs sont adaptés pour détecter des champs magnétiques.

4. Un dispositif conformément à la revendication 1, caractérisé en ce que des dispositifs capteurs sont adaptés pour détecter des changements de température.

5. Un dispositif conformément à la revendication 1, caractérisé en ce que des dispositifs capteurs sont adaptés pour détecter une déformation mécanique.

6. Un dispositif conformément à la revendication 5, caractérisé en ce que lesdits dispositifs capteurs comportent des jauges de contrainte respectives.

7. Un dispositif conformément à la revendication 5, caractérisé en ce que lesdits dispositifs capteurs comportent un matériau piézoélectrique.

8. Un dispositif conformément à l'une quelconque des revendications précédentes, dans quoi lesdits éléments de point d'image sont des condensateurs.

9. Un dispositif conformément à l'une quelconque des revendications précédentes, dans quoi lesdits points d'image comportent chacun trois éléments de point d'image associés au rouge, au vert et au bleu respectivement.

FIG. 1

EP 0 618 527 B1

# FIG. 2

POLARIZING MATERIAL

GLASS

M2

HELIX , H

ITO COATING ( ON SURFACE )

GLASS

M1

POLARIZING MATERIAL

POLYIMIDE

ITO

GLASS

4

**FIG. 3A**

LIGHT

POLARIZING MATERIAL

11

POLARIZING MATERIAL

POLARIZING MATERIAL

EXPERIENCES 90° TWIST

EYE

**FIG. 3B**

EP 0 618 527 B1

# FIG. 4

POLARIZING MATERIAL

GLASS

ITO COATING
( ON SURFACE )

MOLECULES

ELECTRIC FIELD

ITO COATING
( ON SURFACE )

GLASS

POLARIZING MATERIAL

# FIG. 5

**FIG. 6**

V - RAM SYSTEM

ROW DECODER

SENSOR (1,1)

PIXEL CELL ( 1,1 )

ROW 1

ROW 2

ROW 3

SENSE LINE

COLUMN 1

COLUMN 2

COLUMN 3

EP 0 618 527 B1

FIG. 7

EP 0 618 527 B1

# FIG. 7A

```
                    ┌──────────────────┐
              ┌────→│   READ SENSOR    │
              │     └──────────────────┘
              │              │
              │              ▼
              │        ╱──────────╲
              │       ╱   SIGNAL   ╲    NO
              │      ╱   PRESENT    ╲──────────┐
              │      ╲      ?       ╱           │
              │       ╲──────────  ╱            │
              │              │                  │
              │            YES                  │
              │              │                  │
              │              ▼                  │
              │    ┌──────────────────────┐     │
              │    │  LOAD 1 INTO VRAM     │     │
              │    │  AT SENSOR'S ADDRESS  │     │
              │    └──────────────────────┘     │
              │              │                  │
              │              ▼                  │
              │    ┌──────────────────────┐     │
              │    │   READ VRAM AT        │◀────┘
              │    │  SENSOR'S ADDRESS     │
              │    └──────────────────────┘
              │              │
              │              ▼
              │        ╱──────────╲
              │       ╱     1      ╲    NO
              │      ╱   PRESENT    ╲──────────┐
              │      ╲      ?       ╱           │
              │       ╲──────────  ╱            │
              │              │                  │
              │            YES                  │
              │              │                  │
              │              ▼                  │
              │    ┌──────────────────┐         │
              │    │  REFRESH PIXEL   │         │
              │    └──────────────────┘         │
              │              │                  │
              │              ▼                  │
              │  ┌─────────────────────────────────────────────┐
              │  │ DO NOT REFRESH , GO TO NEXT PIXEL IN ROW.    │◀─┘
              │  │ IF AT LAST PIXEL IN ROW, GO TO NEXT COLUMN   │
              │  └─────────────────────────────────────────────┘
              │              │
              │              ▼
              │    ┌──────────────────────┐
              └────│ GO TO " READ SENSOR " │
                   └──────────────────────┘
```

14

# FIG. 8

**FIG. 9**

# FIG. 10

# FIG. 11

HALL VOLTAGE

DRAIN

HALL CONTACT

HALL CONTACT

GATE

SOURCE

FIG. 12

PIXEL CELLS

PIXEL CELL

GLASS

PVDF FILM

CP

T1

T2

EP 0 618 527 B1

**FIG. 13**

CP
T2
PVDF FILM
T1

**FIG. 14**

STYLUS
DD
T2
T1

**FIG. 15**

STYLUS
T2
F
PVDF FILM
G
T1

# FIG. 16

STYLUS

T2

W

PVDF

T1

**FIG. 17**

**FIG. 17A**

**FIG. 18**

**FIG. 18A**

**FIG. 19**

FIG. 20

EP 0 618 527 B1

# FIG. 21

ROW LINE

PASSIVE

PIXEL CELL

COLUMN LINE

ACTIVE MIM

ACTIVE BTB DIODE

ACTIVE RING DIODE

ACTIVE TFT